# FASCICULE DE BREVET EUROPEEN

(11) **EP 0 863 299 B1**
(45) Date de publication et mention de la délivrance du brevet: **02.01.2002**
(21) Numéro de dépôt: 98400464.8
(22) Date de dépôt: 26.02.1998
(51) Int. Cl.: F01P 7/16, G05D 23/02

(54) **Thermostat à montage rapide**
Thermostatventil zum Schnelleinbau
Rapidly mounted thermostatic valve

(30) Priorité: 04.03.1997 FR 9702562
(43) Date de publication de la demande: 09.09.1998
(73) Titulaire: VERNET S.A., 91291 Arpajon Cédex (FR)
(72) Inventeur: Chamot, Jean, 91290 Arjapjon (FR); Henault, Claude, 78720 St Forget Les Sablons (FR)
(74) Mandataire: Jacobson, Claude

(56) Documents cités:
- EP-A- 0 486 757
- EP-A- 0 600 150
- EP-A- 0 661 486
- DE-A- 2 503 946
- DE-A- 4 139 328
- GB-A- 1 382 408
- US-A- 5 231 955
- US-A- 5 292 064

## Description

L'invention concerne les thermostats destinés à régler le débit d'un fluide, notamment dans un circuit de refroidissement de moteur thermique.

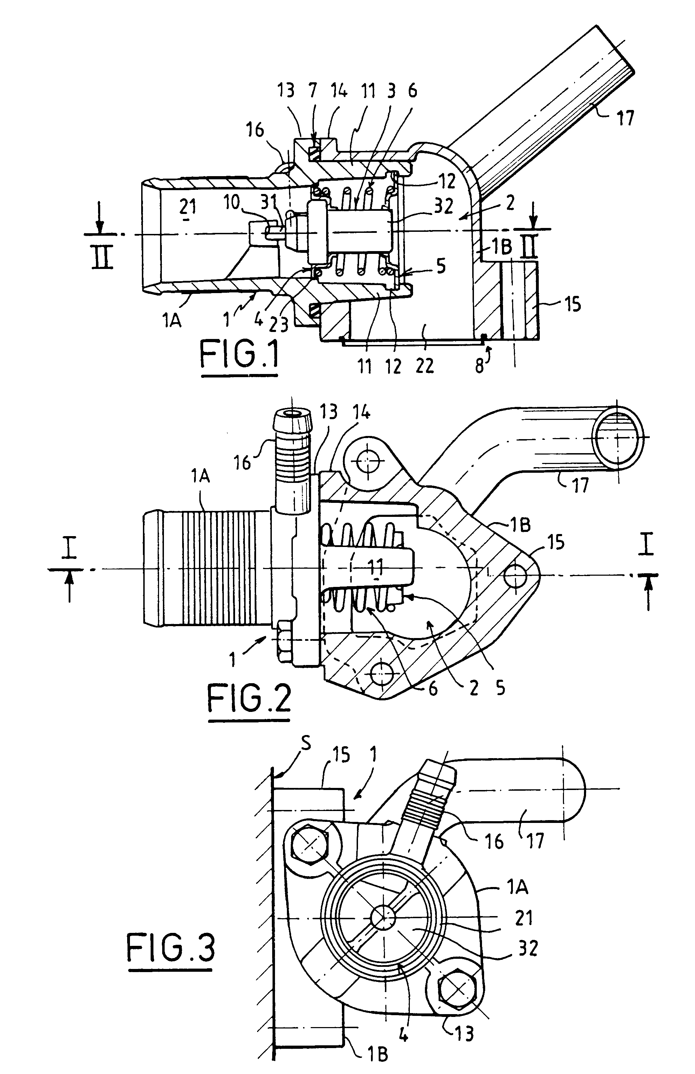

On connaît de tels thermostats représentés sur les figures 1, 2 et 3, insérables entre des conduits de fluide ou de préférence adaptables directement à la culasse d'un moteur.

Ces thermostats comprennent un boîtier 1 coudé, généralement en aluminium ou en alliage d'aluminium moulé, destiné à être fixé à un support S (bride d'un conduit de fluide ou culasse d'un moteur) et dans lequel s'étend un passage intérieur 2 coudé pour le fluide, présentant une région de sortie 21 de fluide à l'opposé du support et une région d'entrée 22 de fluide du côté de celui-ci, et un élément thermostatique 3 logé dans le passage et comportant deux parties 31, 32 mobiles l'une par rapport à l'autre.

Une première partie 31 de l'élément thermostatique 3 est maintenue en position fixe dans le boîtier, et la deuxième partie 32, s'étendant en amont de la première, et portant un dispositif obturateur 4 adapté pour coopérer avec un siège 23 constitué dans une zone de rétrécissement du boîtier, est mobile en translation par rapport à cette première partie pour éloigner et rapprocher jusqu'au contact le dispositif obturateur du siège.

L'extrémité libre de la première partie 31 de l'élément thermostatique 3 est en appui dans un logement 10 centré sur l'axe longitudinal du passage, porté par au moins une nervure longitudinale s'étendant radialement à l'intérieur du passage 2 depuis la paroi de celui-ci ; la deuxième partie 32 est portée et guidée dans son mouvement par un pontet 5 en contact par au moins une région de sa périphérie avec la paroi du passage 2 et percé d'un trou central dans lequel cette deuxième partie est montée coulissante.

Le dispositif obturateur 4 et le pontet 5 sont soumis à l'effort d'un ressort 6 hélicoïdal, s'étendant ici selon un cylindre, tendant à les écarter l'un de l'autre.

Le boîtier 1 est en deux pièces 1A, 1B dans lesquelles sont agencées respectivement la région de sortie 21 de fluide et la région 22 d'entrée de fluide, et l'élément thermostatique est logé dans une partie de la pièce de sortie de fluide, laquelle s'étend le long d'un axe central rectiligne, la partie amont de la pièce de sortie 1A étant elle-même logée dans la partie aval de la pièce d'entrée, qui est coudée.

La partie amont de la pièce de sortie 1A comporte deux doigts 11 prolongeant en amont du siège 23 la paroi du passage pour le fluide, diamétralement opposés, présentant deux rainures transversales respectives se faisant vis-à-vis ; le pontet 5 est bloqué contre les épaulements amont de ces rainures 12 sous l'action du ressort 6.

Les deux pièces 1A, 1B constituant le boîtier 1 comportent extérieurement des brides 13, 14 en regard, présentant des oreilles percées de trous pour le passage de vis de fixation ; l'étanchéité entre les deux pièces 1A, 1B est assurée par un joint annulaire 7 déformable élastiquement, inséré dans une rainure s'étendant circonférentiellement dans l'une des brides, vis-à-vis de l'autre bride, qui est écrasé contre cette autre bride.

La pièce de sortie 1A du boîtier comporte en outre un conduit 16 s'étendant radialement à l'extérieur de celle-ci et débouchant dans son passage interne en aval du siège 23 ; de même, la pièce d'entrée 1B du boîtier comporte en outre un conduit 17 rapporté s'étendant vers l'extérieur et débouchant dans son passage en amont du siège.

Le boîtier 1 est généralement coudé à angle droit compte tenu de l'implantation des différents organes disposés sous le capot du véhicule, et la partie amont de la pièce de sortie 1A comportant les deux doigts 11 entre lesquels est disposée la région amont de la partie mobile 32 de l'élément thermostatique 3 s'étend dans la partie aval et dans le coude de la pièce d'entrée 1B.

L'étanchéité entre le boîtier 1 et son support est assurée par un joint 8 déformable élastiquement inséré dans une rainure s'étendant autour de l'orifice d'entrée de la région d'entrée 22 de la pièce d'entrée 1B.

Il en résulte que le thermostat est constitué d'un nombre relativement grand de pièces, et que l'élément thermostatique 3 ne peut être monté et démonté que par l'amont de la pièce de sortie 1A lorsque les deux pièces 1A, 1B constituant le boîtier 1 sont séparées ; de plus, l'effort exercé par le pontet 5 poussé par le ressort 6 s'exerce sur le boîtier 1 et plus précisément sur les doigts amont 11 de la pièce de sortie 1A, relativement fragiles, ce qui compromet la fiabilité du boîtier et ainsi du thermostat, à moins d'utiliser un matériau relativement résistant comme l'aluminium ou un alliage d'aluminium, relativement onéreux.

De plus le document EP 0 600 150 A présente les caractéristiques du préambule de la revendication 1.

L'invention a pour but de remédier à ces inconvénients et concerne à cet effet un thermostat du type comprenant un boîtier coudé adapté pour être fixé à un support et dans lequel s'étend un passage intérieur coudé pour un fluide présentant une région de sortie de fluide à l'opposé du support et une région d'entrée du fluide du côté du support, et un élément thermostatique comportant deux parties mobiles l'une par rapport à l'autre, une première partie étant maintenue en position fixe dans le boîtier, et la deuxième, s'étendant en amont de la première, portant un dispositif obturateur adapté pour coopérer avec un siège constitué dans une zone de rétrécissement du boîtier, étant mobile en translation par rapport à cette première partie pour éloigner et rapprocher jusqu'au contact le dispositif obturateur du siège et étant guidée en amont du dispositif obturateur par un organe de guidage soumis à un effort de rappel vers l'amont exercé par un organe élastique, thermostat caractérisé en ce que le boîtier est en une seule pièce dans le passage de laquelle est logé l'élément thermostatique, la première partie de l'élément thermostatique est en appui contre une région de la paroi du passage proche du coude de celui-ci et centré sur la région d'entrée, et cette région d'entrée comporte des moyens de solidarisation de l'organe de guidage à la paroi du passage.

Grâce au fait que le boîtier est en une seule pièce, sa robustesse est augmentée, et l'utilisation d'un joint d'étanchéité et de pièces d'assemblage telles que des vis est évitée.

Selon une caractéristique préférentielle avantageuse, l'invention est un thermostat tel que défini plus haut, dans lequel l'organe de guidage est un pontet dont les extrémités sont ajustées dans le passage et percé d'un trou dans lequel la deuxième partie de l'élément thermostatique est montée coulissante, le dispositif obturateur et le pontet étant soumis à l'effort d'un ressort tendant à les écarter l'un de l'autre, caractérisé en ce que les moyens de solidarisation sont des saillies s'étendant dans le passage pour bloquer le pontet en direction de l'amont sous l'action du ressort avant le montage du thermostat sur le support, et en ce que le pontet porte au moins une languette s'étendant vers l'amont au-delà de l'extrémité amont du boîtier et également transversalement vers l'extérieur au-delà de parois en regard des saillies, afin que lorsque le thermostat est fixé au support, la languette soit repoussée par le support vers l'aval du passage et l'effort du ressort sur le pontet soit reporté des saillies au support.

Grâce au fait que l'une des parties de l'élément thermostatique est en appui contre une paroi du passage et l'autre partie s'étend en amont au travers d'un pontet bloqué par des saillies dans la région d'entrée du boîtier, il est possible de monter l'élément thermostatique dans le boîtier rapidement par un mouvement de montage de baïonnette comme on le verra mieux dans la suite.

Grâce au fait que le pontet porte au moins une languette en saillie au-delà de l'extrémité amont du boîtier et également radialement vers l'extérieur, le montage du boîtier sur le support supprime automatiquement l'appui de ce pontet contre les saillies et soulage celles-ci de la pression exercée par le ressort. Il en résulte qu'il devient possible de réaliser le boîtier en matériau synthétique, par exemple thermoplastique ou thermodurcissable, dont les caractéristiques, notamment mécaniques, exigées, sont beaucoup moins importantes que par le passé, grâce au report d'effort.

D'autres caractéristiques et avantages 'de l'invention ressortiront de la description qui va suivre d'une forme de réalisation de l'invention donnée à titre d'exemple non limitatif, et en référence aux dessins joints dans lesquels :
- la figure 1 est une coupe longitudinale schématique du thermostat connu décrit plus haut, selon la ligne I-I de la figure 2,
- la figure 2 est une vue de dessus par rapport à la figure 1, du thermostat de cette figure, l'une des pièces constituant son boîtier étant coupée selon la ligne II-II de la figure 1,
- la figure 3 est une vue schématique de dessous du thermostat de la figure 1,
- la figure 4 est une vue schématique de dessous d'un thermostat selon l'invention,
- la figure 5 est une coupe longitudinale schématique du thermostat selon l'invention de la figure 4, selon la ligne V-V de cette figure,
- la figure 6 est une vue très agrandie d'un détail de la figure 5,
- la figure 7 est une section selon la ligne VII-VII de la figure 6,
- la figure 8 est une vue correspondant à la figure 6 lorsque le thermostat est monté sur un support tel qu'une culasse de moteur,
- la figure 9 est une section selon la ligne IX-IX de la figure 8,
- la figure 10 est une coupe partielle schématique du thermostat selon l'invention de la figure 4 montrant le montage d'une sonde de température sur ce thermostat.

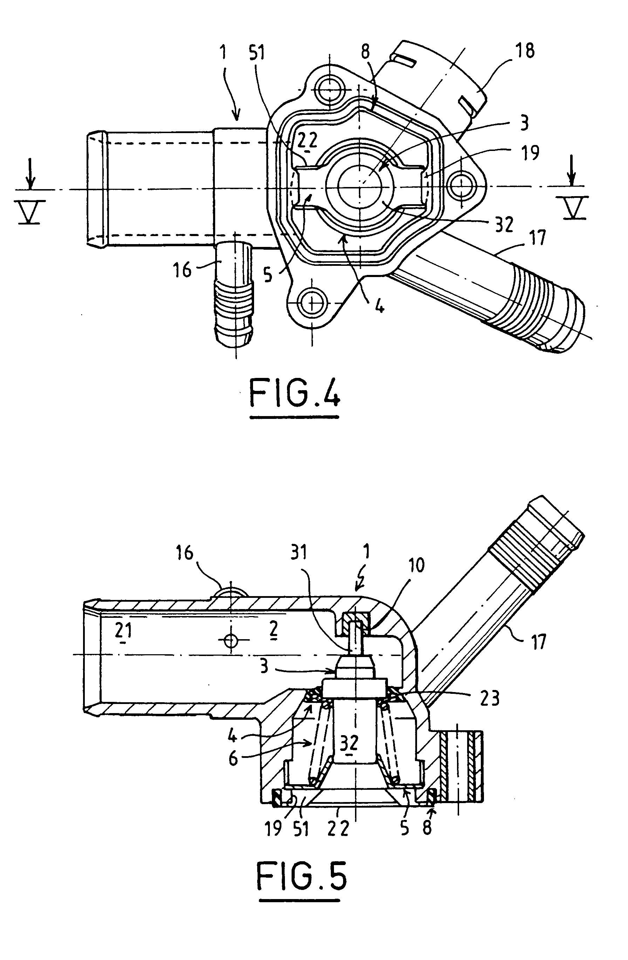

Le thermostat selon l'invention des figures 4 à 10 présentant un certain nombre de points communs avec le thermostat connu des figures 1 à 3, les organes correspondants ont été désignés par les mêmes numéros -de référence.

Ce thermostat, étant prévu pour être parfaitement interchangeable avec le thermostat connu des figures 1 à 3, comprend un boîtier 1 coudé ici à angle droit destiné à être fixé à un support identique ; à l'intérieur, s'étend un passage 2 pour le fluide, également coudé à angle droit, présentant une région de sortie 21 de fluide à l'opposé du support et une région d'entrée 22 de fluide du côté de celui-ci ; un élément thermostatique 3 logé entièrement dans le passage comporte deux parties 31, 32 mobiles l'une par rapport à l'autre, une première partie 31 étant maintenue en position fixe dans le boîtier, et la deuxième partie 32 s'étendant en amont de la première, portant un dispositif obturateur 4 adapté pour coopérer avec un siège 23 constitué dans une zone de rétrécissement du boîtier, étant mobile en translation par rapport à cette première partie.

En revanche, le boîtier 1 est en une seule pièce, et si l'extrémité libre de la première partie 31 maintenue en position fixe, de l'élément thermostatique, est en appui dans un logement 10 centré sur un axe longitudinal du passage, il ne s'agit pas de l'axe longitudinal de la partie du boîtier correspondant précédemment à la pièce de sortie 1A, mais de celui de la partie correspondant à la pièce d'entrée 1B ; en d'autres termes, l'élément thermostatique 3 et l'appui de celui-ci dans le boîtier 1 ne sont pas centrés sur l'axe central de la région de sortie, mais sur celui de la région d'entrée, du boîtier. Dans ces conditions, il n'est plus nécessaire de prévoir une nervure en saillie dans le passage 2 pour porter le logement 10, et celui-ci est réalisé dans la paroi même du boîtier ou dans une garniture insérée dans cette paroi, dans la région du coude du passage 2, qui fait face à l'orifice d'entrée du passage.

La deuxième partie 32 de l'élément thermostatique est portée et guidée dans son mouvement par un pontet- 5 dont les extrémités sont ajustées dans le passage 2 et percé d'un trou central dans lequel cette deuxième partie est montée coulissante. Le dispositif obturateur 4 et le pontet 5 sont encore soumis à l'effort d'un ressort 6 approximativement hélicoïdal, s'étendant ici selon un tronc de cône, et tendant à les écarter l'un de l'autre ; pour bloquer le pontet en direction de l'amont sous l'action du ressort avant le montage du thermostat, la région d'entrée de fluide comporte des saillies 19, ici deux saillies opposées, s'étendant en direction du centre du passage 2 ; l'écartement de ces saillies 19 est inférieur à la longueur du pontet 5, mais la région d'entrée 22 du passage 2 présente par ailleurs, dans au moins une autre direction transversale que celle dans laquelle s'étendent les saillies, une ouverture plus étendue que la longueur du pontet, sur une largeur supérieure à celle de celui-ci ; ainsi, l'élément thermostatique 3 peut être inséré dans le boîtier de telle sorte que le pontet 5 soit orienté dans cette autre direction, à l'encontre de l'effort exercé par le ressort 6, puis pivoté autour de son axe d'un angle permettant d'amener les extrémités du pontet en regard des saillies, et relâché de manière à laisser ces extrémités venir s'appuyer contre l'épaulement des saillies tandis que la partie fixe 31 de l'élément thermostatique est insérée dans son logement 10 (montage baïonnette) ; l'angle entre la direction de l'ouverture d'introduction du pontet et la direction dans laquelle s'étendent les saillies est par exemple de l'ordre de 45 degrés.

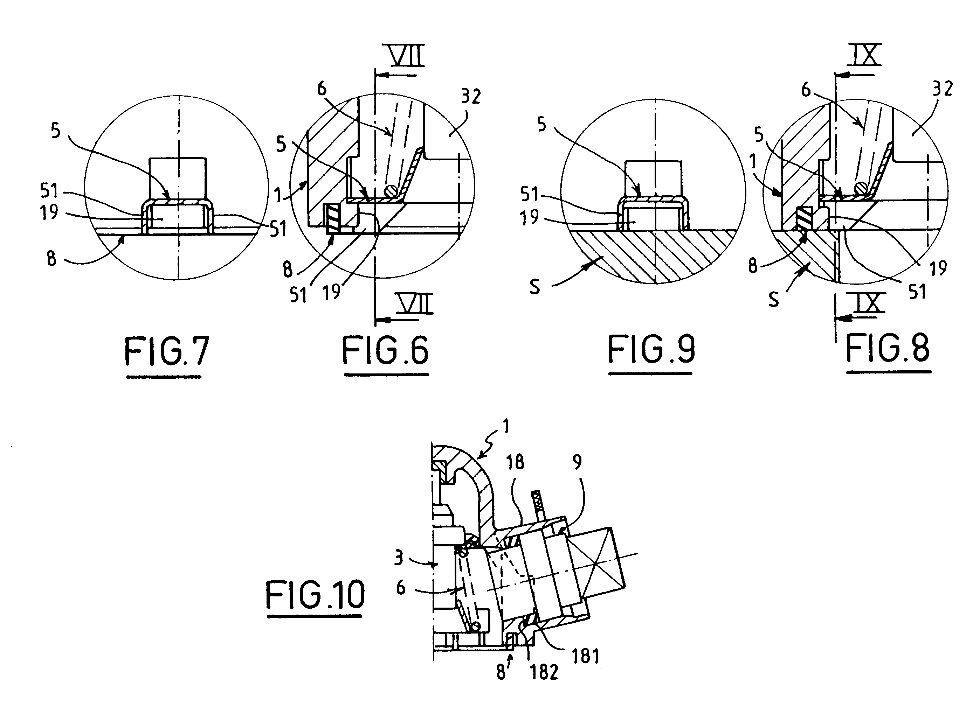

De plus, pour que l'effort exercé en fonctionnement par le ressort de rappel 6, relativement puissant, sur le pontet 5, ne soit pas transmis au boîtier 1, mais à son support, le pontet 5 présente, au moins à proximité de ses extrémités, une section transversale en U dont les branches latérales définissent des ailes ou languettes 51 écartées d'une distance supérieure à la largeur des saillies 19 et s'étendant en direction du support, ces languettes ayant une hauteur supérieure à la distance séparant la surface d'appui pour le pontet 5 sur les saillies 19 du boîtier 1, de l'extrémité libre du boîtier côté amont. Ainsi, lorsque le thermostat est séparé du support, le pontet 5 repose sur l'épaulement des saillies 19 avec ses languettes s'étendant transversalement au passage de part et d'autre de ces saillies (figures 4 à 7). En revanche, lorsque le thermostat est en cours de montage sur son support, dont l'orifice de sortie présente dans au moins une direction parallèle à celle dans laquelle s'étendent les saillies du boîtier, une ouverture inférieure à l'écartement des extrémités distales respectives des languettes 51, la surface du support en regard du boîtier repousse ces languettes saillantes vers l'amont, en direction de l'aval ; ainsi le pontet quitte son appui contre l'épaulement des saillies 19 du boîtier, et reste ensuite en appui contre le support (bloc moteur ou culasse métallique), par l'intermédiaire des languettes (figures 8 et 9).

Un conduit 16 s'étend radialement à l'extérieur du boîtier 1 et débouche dans le passage 2 en aval du siège, et un conduit 17 s'étend vers l'extérieur et débouche dans le passage 2 en amont du siège. Un autre conduit 18 débouche également dans le passage 2 en amont du siège, pour le montage d'une sonde de température (figure 10) comme on le verra plus en détail dans la suite. Ces conduits peuvent être réalisés en une seule pièce avec le boîtier 1.

L'étanchéité entre le boîtier 1 et son support est assurée par un joint 8 déformable élastiquement disposé dans une rainure courant autour de l'orifice d'entrée de la région d'entrée 22, à distance de cet orifice.

Lorsque le boîtier 1 est en matériau synthétique, par exemple thermoplastique, l'appui créé dans la paroi du passage 2 pour la partie fixe 31 de l'élément thermostatique, peut avantageusement être muni d'une garniture métallique présentant une alvéole constituant le logement 10 pour cette partie fixe 31.

L'obturateur peut être constitué de plusieurs pièces, par exemple une pièce en matière synthétique destinée à prendre appui contre le siège 23 du boîtier et une coupelle ou un pontet métallique prenant appui contre un épaulement d'une collerette de la partie mobile 32 de l'élément thermostatique.

De préférence, le siège 23 pour l'obturateur 4 est réalisé en amont du coude du passage 2, dans la zone de transition entre le coude et la partie du boîtier qui s'étend vers l'amont jusqu'à la région d'entrée 22 du passage ; il présente par exemple une forme tronconique s'évasant vers l'amont.

Si l'extrémité amont de la partie mobile 32 de l'élément thermostatique 3 est en retrait vers l'aval par rapport aux saillies 19 lorsque l'obturateur 4 est contre son siège 23, le pontet 5 présente un retrait vers l'aval dans sa partie centrale ; ce retrait peut être constitué par des portions du pontet qui sont inclinées et dont la base peut avantageusement constituer un moyen de guidage pour le ressort 6, évitant le déplacement latéral de l'extrémité amont de celui-ci.

Afin de faciliter les branchements, la périphérie des conduits peut être munie d'ondulations s'étendant annulairement.

Le troisième conduit 18 est destiné comme on l'a vu à recevoir une sonde de température 9 ; afin que l'étanchéité soit maintenue, un joint annulaire 181 est inséré entre la sonde 9 et la paroi du conduit 18, en appui contre un épaulement 182 du conduit, correspondant à un rétrécissement du diamètre de celui-ci en direction de l'intérieur du boîtier 1.

Bien entendu, l'invention n'est pas limitée à la forme de réalisation ci-dessus décrite et représentée, et on pourra en prévoir d'autres formes sans sortir de son cadre, et en particulier réaliser le boîtier en des matériaux très divers, compte tenu du fait que les contraintes mécaniques qui lui sont appliquées sont sensiblement plus faibles que celles qui sont appliquées au boîtier dans le cas des thermostats connus placés dans les mêmes conditions de travail.

## Revendications

1. Thermostat du type comprenant un boîtier (1) coudé adapté pour être fixé à un support (S) et dans lequel s'étend un passage intérieur (2) coudé pour un fluide présentant une région de sortie (21) de fluide à l'opposé du support et une région d'entrée (22) du fluide du côté du support, et un élément thermostatique (3) comportant deux parties (31, 32) mobiles l'une par rapport à l'autre, une première partie (31) étant maintenue en position fixe dans le boîtier, et la deuxième (32), s'étendant en amont de la première, portant un dispositif obturateur (4) adapté pour coopérer avec un siège (23) constitué dans une zone de rétrécissement du boîtier, étant mobile en translation par rapport à cette première partie pour éloigner et rapprocher jusqu'au contact le dispositif obturateur du siège et étant guidée en amont du dispositif obturateur par un organe de guidage (5) soumis à un effort de rappel vers l'amont exercé par un organe élastique (16), la première partie (31) de l'élément thermostatique (3) étant en appui contre une région de la paroi du passage (2) proche du coude de celui-ci et centrée sur la région d'entrée (22), thermostat **caractérisé en ce que** le boîtier (1) est en une seule pièce dans le passage (2) de laquelle est logé l'élément thermostatique, la région d'entrée (22) du fluide du passage intérieur (2) comporte des saillies de solidarisation (19) de l'organe de guidage à la paroi du passage, s'étendant dans le passage pour bloquer l'organe de guidage (5) en direction de l'amont, et l'organe de guidage (5) porte au moins une languette (51) s'étendant vers l'amont au-delà de l'extrémité amont du boîtier lorsque le thermostat n'est pas monté sur le support(S) et également transversalement vers l'extérieur au-delà des parois des saillies, afin que lorsque le thermostat est fixé au support, la languette (51) soit repoussée par le support (S) vers l'aval du passage et l'effort de l'organe élastique (6) sur l'organe de guidage soit reporté des saillies au support.

2. Thermostat selon la revendication 1, **caractérisé en ce que** l'organe de guidage (5) est un pontet dont les extrémités sont ajustées dans le passage (2) et percé d'un trou dans lequel la deuxième partie (32) de l'élément thermostatique est montée coulissante, le dispositif obturateur (4) et le pontet (5) étant soumis à l'effort d'un ressort (6) tendant à les écarter l'un de l'autre, et les saillies (19) s'étendent dans le passage pour bloquer le pontet en direction de l'amont sous l'action du ressort (6) avant le montage du thermostat sur le support (S) .

3. Thermostat selon la revendication 1, **caractérisé en ce que** le boîtier est en matériau synthétique.

4. Thermostat selon la revendication 1, **caractérisé en ce que** la région de la paroi du passage (2) contre laquelle prend appui la partie fixe (31) de l'élément thermostatique (3) est munie d'une garniture comportant un logement (10) dans lequel est insérée cette partie fixe (31).

5. Thermostat selon la revendication 1, **caractérisé en ce que** le siège (23) est réalisé en amont d'un coude du passage (2), dans une zone de transition entre ce coude et une partie du boîtier (1) qui s'étend vers l'amont jusqu'à la région d'entrée (22) de fluide.

6. Thermostat selon la revendication 2, **caractérisé en ce que** le pontet (5) présente une section transversale en U dont les branches latérales définissent des languettes (51) d'une hauteur supérieure à la distance séparant la surface d'appui des saillies (19) pour le pontet, de l'extrémité libre du boîtier (1) côté amont.

7. Thermostat selon la revendication 2, **caractérisé en ce que** le pontet (5) présente une section transversale en U dont les branches latérales définissent des languettes (51) s'étendant transversalement au passage (2) de part et d'autre des saillies afin de faire face à la surface du support (S) en regard du boîtier (1).

8. Thermostat selon la revendication 2, **caractérisé en ce que** le pontet (5) présente dans sa partie centrale un retrait vers l'aval.

9. Thermostat selon la revendication 1, **caractérisé en ce que** le boîtier (1) comporte des conduits extérieurs (16, 17) en une seule pièce avec lui.

10. Thermostat selon la revendication 1, **caractérisé en ce que** le boîtier (1) comporte un conduit extérieur (18) pour le montage et le logement d'une sonde de température (9), en une seule pièce avec lui.

## Patentansprüche

1. Thermostat mit einem gekrümmten Gehäuse (1), das auf einer Halterung (S) befestigt wird, und das einen gekrümmten inneren Kanal (2) für ein Fluid aufweist und einen Ausgangsbereich (21) für das Fluid gegenüber der Halterung und einen Eingangsbereich (22) für das Fluid an der Halterung enthält, sowie einen Thermostat (3) mit zwei untereinander beweglichen Teilen (31, 32), wobei der erste Teil in einer festen Position in dem Gehäuse gehalten wird, und der zweite Teil (32) oberhalb des ersten Teils verläuft, und einen Deckel (4) trägt, der mit einem Sitz (32) zusammenwirkt, der durch eine Verengung des Gehäuses hergestellt wird, und der in seitlicher Richtung gegenüber dem ersten Teil verschiebbar ist, um den Deckel von dem Sitzes zu entfernen oder ihn anzunähern und oberhalb des Deckels durch ein Führungsorgan (5) geführt wird, das in oberer Richtung der Rückzugskraft eines elastischen Organs (16) unterzogen wird, und der erste Teil (31) des Thermostats (3) an einem Bereich der Wand des Kanals (2) an dessen Krümmung zur Anlage kommt und auf den Eingangsbereich (22) zentriert ist,
**dadurch gekennzeichnet, dass**
das Gehäuse (1) in einem Stück in dem Kanal (2) ausgebildet ist, in den der Thermostat eingesetzt wird, und der Eingangsbereich (22) für das Fluid des inneren Kanals (2) Vorsprünge (19) für die Befestigung des Führungsorgans an der Wand des Kanals aufweist, welche in dem Kanal verlaufen, um das Führungsorgan (5) in oberer Richtung zu blockieren, und das Führungsorgan (5) mindestens eine Langette (51) aufweist, die flnssawfwärts über den oberen Endabschnitt des Gehäuses hinausreicht, wenn der Thermostat nicht auf der Halterung (S) befestigt ist, und ebenfalls seitlich in Richtung nach außen über die Wände der Vorsprünge hinausragt, damit nach der Befestigung des Thermostats an der Halterung die Langette (51) durch die Halterung (S) an die Unterseite des Kanals verschoben wird, und die Kraft, die von dem elastischen Organ (6) auf das Führungsorgan ausgeübt wird, mit Hilfe der Vorsplrünge auf die Halterung übertragen wird.

2. Thermostat nach Anspruch 1,
**dadurch gekennzeichnet, dass**
das Führungsorgan (5) aus einem Bügel besteht, dessen Endabschnitte in dem Kanal (2) befestigt und mit einer Bohrung ausgestattet sind, in welche der zweite Teil (32) des Thermostats gleitend eingesetzt wird, wobei der Deckel (4) und der Bügel (5) der Kraft einer Feder (6) unterzogen werden, die sie voneinander abspreizt, und die Vorsprünge (19) in dem Kanal verlaufen, um den Bügel flussaufwärts unter der Wirkung der Feder (6) vor der Montage des Thermostats auf der Halterung (S) zu blockieren.

3. Thermostat nach Anspruch 1,
**dadurch gekennzeichnet, dass**
das Gehäuse aus einem Kunststoff besteht.

4. Thermostat nach Anspruch 1,
**dadurch gekennzeichnet, dass**
der Bereich der Wand des Kanals (2), an dem der feste Teil (31) des Thermostats (3) anliegt, mit einem Beschlag ausgestattet ist, welcher ein Lager (10) enthält, in das dieser feste Teil (31) eingesetzt wird.

5. Thermostat nach Anspruch 1,
**dadurch gekennzeichnet, dass**
der Sitz (23) oberhalb der Krümmung des Kanals (2) in einem Übergangsbereich zwischen dieser Krümmung und einem Teil des Gehäuses (1) angeordnet ist, welcher in oberer Richtung bis zu dem Eingangsbeieich (22) des Fluids verläuft.

6. Thermostat nach Anspruch 1,
**dadurch gekennzeichnet, dass**
der Bügel (5) einen U-förmigen Querschnitt adweist, dessen Schenkel Langetten (51) mit einer Höhe bilden, die über dem Abstand liegt, welcher die Auflagefläche der Vorsprünge (19) des Bügels an dem freien Endabschnitt des Gehäuses (1) in oberer Richtung trennt.

7. Thermostat nach Anspruch 1,
**dadurch gekennzeichnet, dass**
der Bügel (5) einen U-förmigen Querschnitt aufweist, dessen seitliche Schenkel Langetten (51) bilden, die quer zu dem Kanal (2) auf den beiden Seiten der Vorsprünge so verlaufen, dass sie an der Oberfläche der Halterung (S) gegenüber dem Gehäuse (1) liegen.

8. Thermostat nach Anspruch 1,
**dadurch gekennzeichnet, dass**
der Bügel (5) in seinem zentralen Teil eine flussabwärts verlaufende Verengung aufweist.

9. Thermostat nach Anspruch 1,
**dadurch gekennzeichnet, dass**
das Gehäuse (1) an seiner Außenseite Leitungsrohre (16, 17) aufweist, die einteilig mit diesem Gehäuse ausgebildet sind.

10. Thermostat nach Anspruch 1,
**dadurch gekennzeichnet, dass**
das Gehäuse (1) ein äußeres Leitungsrohr (18) für die Montage und Aufnahme eines Temperaturfühlers (9) aufweist, das einteilig mit diesem Gehäuse ausgebildet ist.

## Claims

1. Thermostat of the type comprising a bent housing (1) which is adapted to be fixed to a support (S) and in which extends a bent internal passage (2) for a fluid having a fluid outlet rebion (21) opposite the support and a fluid inlet region (22) beside the support, and a thermostatic element (3) having two parts (31, 32) which are movable relative to one another, of which the first part (31) is held in a fixed position in the housing and the second part (32) extending upstream of the first part bears a closure device (4) adapted to co-operate with a seal (23) formed in a narrowed zone of the housing, this second part being movable in translation relative to this first part in order to move the closure device away from the seat and closer to the seat until they are in contact, and also being guided upstream of the closure device by a guide part (5) which is subject to a restoring force directed upstream and exerted by a resilient part (16), the first part (31) of the thermostatic element (3) bearing against a region of the wall of the passage (2) close to the bend in the latter and centred on the inlet region (22), this thermostat being **characterised in that** the housing (1) is in one piece and the thermostatic element is accommodated in the passage (2) thereof, the fluid inlet region (22) of the internal passage (2) has projections (19) joining the guide part to the wall of the passage, extending in the passage in order to lock the guide part (5) in the upstream direction, and the guide part (5) bears at least one tab (51) extending upstream beyond the upstream end of the housing when the thermostat is not mounted on the support (S) and also transversely towards the exterior beyond the walls of the projections, in order that when the thermostat is fixed on the support the tab (51) is pushed by the support (S) in the downstream direction of the passage and the force of the resilient part (6) on the guide part is transferred from the projections to the support.

2. Thermostat as claimed in Claim 1, **characterised in that** the guide part (5) is a bridge of which the ends are fitted in the passage (2) and pierced by a hole in which the second part (32) of the thermostatic element is mounted so as to slide, the closure device (4) and the bridge (5) being subject to the force of a spring (6) which tends to move them apart from one another, and the projections (19) extend in the passage in order to lock the bridge in the upstream direction under the action of the spring (6) before the thermostat is mounted on the support (S).

3. Thermostat as claimed in Claim 1, **characterised in that** the housing is made from synthetic material.

4. Thermostat as claimed in Claim 1, **characterised in that** the region of the wall of the passage (2) against which the fixed part (31) of the thermostatic element (3) bears is equipped with a fitting having a recess (10) into which this fixed part (31) is inserted.

5. Thermostat as claimed in Claim 1, **characterised in that** the seat (23) is provided upstream of a bend in the passage (2) in a transition zone between this bend and a part of the housing (1) which extends upstream as far as in the fluid inlet region (22).

6. Thermostat as claimed in Claim 2, **characterised in that** the bridge (5) has a U-shaped crass-section of which the lateral arms define tabs (51) having a height greater than the distance separating the bearing surface of the projections (19) for the bridge from the free end of the housing (1) on the upstream side.

7. Thermostat as claimed in Claim 2, **characterised in that** the bridge (5) has a U-shaped cross-section of which the lateral arms define tabs (51) extending transversely with respect to the passage (2) on either side of the projections in order to face the opposing surface (S) of the housing (1).

8. Thermostat as claimed in Claim 2, **characterised in that** the bridge (5) has a narrowed portion directed downstream in its central part.

9. Thermostat as claimed in Claim 1, **characterised in that** the housing (1) has external conduits (16, 17) integral with it.

10. Thermostat as claimed in Claim 1, **characterised in that** the housing (1) has integral with it a conduit (18) for mounting and accommodating a temperature sensor (9).
